# NEW EUROPEAN PATENT SPECIFICATION

(11) **EP 0 604 380 B2**
(45) Date of publication and mention of the opposition decision: **07.03.2001**
(45) Mention of the grant of the patent: 02.04.1997
(21) Application number: 93850241.6
(22) Date of filing: 22.12.1993
(51) Int. Cl.: G01B 5/00

(54) **A co-ordinate measuring machine**
Koordinatenmessmaschine
Machine de mesure de coordonnées

(30) Priority: 22.12.1992 SE 9203884
(43) Date of publication of application: 29.06.1994
(73) Proprietor: C.E. JOHANSSON AB, S-631 81 Eskilstuna (SE)
(72) Inventor: Lindholm, Anders, S-633 48 Eskilstuna (SE); Pettersson, Bo, S-644 36 Torshälla (SE)
(74) Representative: Örtenblad, Bertil Tore

(56) References cited:
- WO-A-89/03505
- GB-A- 2 080 954
- GB-A- 2 205 647
- US-A- 4 495 703
- US-A- 4 594 791
- US-A- 4 727 653
- Hochglanzbroschüre der Fa. Carl Zeiss: "CNC Coordinate Measuring Machnines with Universal 3D Probe Head" gedruckt 1987
- Hochglanzbroschüre der Fa. Carl Zeiss "CNC-Koodinatenmessgeräte, Portalmessgeräte mit messendem Tastkopf", gedruckt 1989
- W. Beitz und K.H. Küttner "Dubbel, Taschenbuch für Maschinenbau", 1987; Seiten F14 bis F16
- Prospectus on high gloss paper of the Carl Zeiss company "CNC Corrdinate Measuring Machines with Universal 3D Probe Head", printed 1987
- Prospectus on high gloss paper of the Carl Zeiss company "CNC Koordinatenmeßgeräte Portalmeßgeräte mit messendem Tastkopf, printed 1989

## Description

The present invention relates to a co-ordinate measuring machine which includes a base, base-carried measuring equipment, and a measuring table on which the object to be measured is placed.

Co-ordinate measuring machines are used to establish the co-ordinates of numerous points on the surface of an object with extreme accuracy, so as to determine the appearance of the article being measured. For instance, a co-ordinate measuring machine can be used to measure the co-ordinates of a prototype and the measurement values obtained then used to control a machine tool in the manufacture an object whose shape is identical to the measured object. In order to meet the measuring accuracy required, co-ordinate measuring machines are normally constructed with great stability so as to prevent deformation in the machine, since deformation is liable to have a negative effect on the measuring result.

WO 89/03505 discloses a coordinate measuring machine in which the work table is supported on the base by blocks slidably supported on the base. This arrangement is said to isolate the work table and the base against both differential expansion and contraction and deflection caused by workpiece weight.

GB-A-2 080 954 describes a co-ordinate measuring machine which comprises a rigded base frame providing respective sleeves disposed at intersections of ribs, each sleeve receiving therewithin a respective vertically extending support whose lower end bears on the ground and whose upper end acts as a support for a measuring table by way of a respective bearing element. The table is located but not supported by the base frame by way of coupling elements in a manner free from play and stress, which elements may include an annular diaphragm disposed between the upper end of each support and the frame. Alternatively, the coupling elements can comprise a ball and a pin attached to the underside of the table and associated respectively with a ball socket and slotted guide carried by the frame.

The present invention is intended to avoid deformation of the machine base or machine stand as a result of bending loads caused by the laying-up table, this object applying to all types of co-ordinate measuring machines which comprise a base or stand which supports a laying-up table on which the object to be measured is placed and to which the column or columns carrying the measuring probe of the machine are attached.

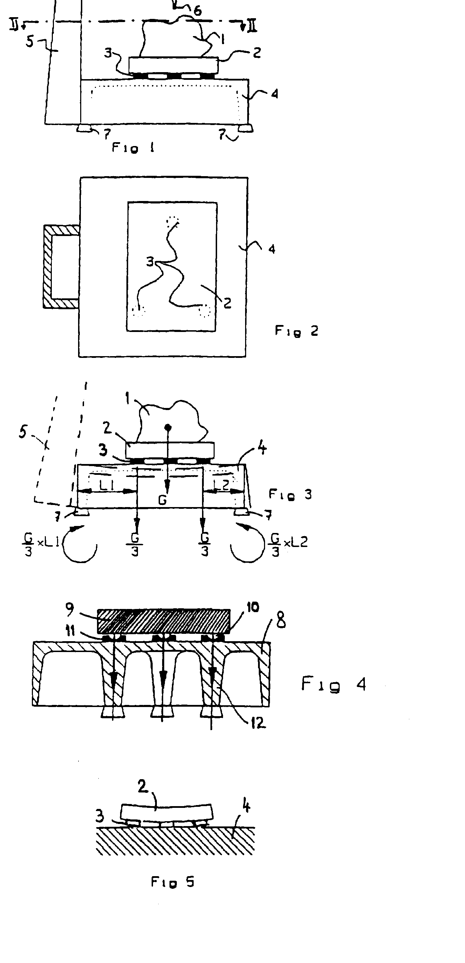

This problem is illustrated in Figures 1-3 of the accompanying drawings, these Figures illustrating schematically a co-ordinate measuring machine of the aforedescribed kind with an object 1 to be measured placed on a laying-up table 2, which is supported by feet 3 resting on a base 4. A column 5 which carries those elements and movement means that are needed to move the probe 6 in three directions at right angles to one another is attached to the base 4. The base 4 is supported by feet 7. Figure 2 is a partly sectioned view of the machine shown in Figure 1 taken from above, and shows the feet 3 of the laying-up table positioned in the corners of an imaginary isosceles triangle.

Figure 3 is a schematic highly exaggerated illustration of how the base 4 is deformed principly by an object 1 to be measured placed on the laying-up table 2. If it is assumed that the centre of gravity of the object coincides with the centre point of the imaginary isosceles triangle that can be drawn between the feet 3 of the laying-up table 2, the weight G of the object will be distributed equally between the feet 3 and the base will be subjected to a punctiform load G/3 at the location of the feet 3. The laying-up table 4 will therefore be subjected to a bending moment which will cause the table to bend in the manner highly exaggerated in Figure 3 with broken lines, therewith deforming the table and causing the column 5 attached to the table 4 to move out of its precisely vertical position.

This movement of the column 5 is caused by the effect of the weight of the object lying on the laying-up table, its position on the table and the location of its centre of gravity. Deformation-bending of the laying-up table and subsequent movement of the column 5 from its precisely vertical position will therefore vary in dependence on where the object is placed on the table and on how the object is placed. The repetitive precision of the co-ordinate measuring machine, i.e. control measurement to ascertain that a manufactured product coincides with a prototype, is therefore impaired by the bending deformation described above. Any deformation in the laying-up table on the other hand will have only an insignificant effect, since each measuring operation carried out with the measuring probe 6 presumes that the object to be measured has been pre-aligned or set-up within the operational volume of the machine prior to carrying out the actual measuring operation.

The aforesaid problems are solved in accordance with the invention by means of a measuring machine as defined in claim 1. This ensures that the force vectors from the table feet will pass through the base feet irrespective of any deformation in the laying-up table.

According to a preferred embodiment of an inventive co-ordinate measuring machine, each foot of the measuring table rests in a respective hemispherical cup mounted on the base.

A preferred embodiment of the invention will now be described with reference to the accompanying drawings, in which
Figures 1-3 are respectively a side view of a conventional co-ordinate measuring machine, a schematic sectional view taken on the line II-II in Figure 1, and a partial side view respectively, these views having been described in the aforegoing with the intention of illustrating the problems solved by the invention;
Figure 4 is a vertical sectional view of a base and a laying-up table of a co-ordinate measuring machine according to one preferred embodiment of the invention;
Figure 5 is a side view of a conventional laying-up table and shows the table deformed by the weight of the object to be measured in a highly exaggerated fashion; and
Figure 6 is a side view of a bearing cup for one foot of a laying-up table of an inventive co-ordinate measuring machine.

Figures 4 and 6 illustrate a preferred embodiment of the base 8 and the laying-up table 9 of an inventive co-ordinate measuring machine. The column or columns which carries or carry the actual measuring equipment is/are not shown in the drawings, since such equipment forms no part of the invention. It should be pointed out that the conventional measuring machine illustrated in Figures 1-3 merely constitutes a non-limiting example of a measuring machine to which the invention can be applied, and that in principle the invention can be applied to all co-ordinate measuring machines with which the object to be measured is placed on a laying-up table which rests on the machine base.

In the embodiment illustrated in Figure 4, the laying-up table has three feet 10 which are arranged in the same manner as the feet 3 of the machine illustrated in Figures 1-3, i.e. in the comers of an imaginary isosceles triangle. The feet 10 of the laying-up table 9 have hemispherical surfaces which face towards the base 8 and rest in bearing cups 11 mounted on the upper surface of the base. The base 8 is provided with feet 12 which are located immediately beneath the feet 10 on the laying-up table. Because the feet 10, 12 of the laying-up table and the base are vertically in line with one another, there is obtained a continuous force flow vertically between the respective feet of the table and the base, which means that an object placed on the laying-up table will solely subject the base to pressure loads since no moment arms for the force vectors acting through respective feet on the table and the base will occur. The base 8 will not therefore be deformed by bending.

Figure 5 illustrates schematically and in an exaggerated fashion how the laying-up table 2 of the conventional co-ordinate measuring machine illustrated in Figures 1-3 is deformed when subjected to the load of an object to be measured. As illustrated in the Figure, the contact points between the feet of the table 2 and the base 4 are moved, and therewith also the attack points of the force vectors, due to deformation of the table. Such movement of the contact points creates a moment arm for the force vector through the table feet of corresponding size and there occurs a bending moment which can deform the base. In order to ensure that bending deformation of the laying-up table will not cause the contact points between the feet 10 of the table 9 and the upper surface of the base 8 to move, the feet of the table 10 have a hemispherical shape on the side thereof proximal to the base. Consequently, the attack point of the force vectors through the table feet will always lie on the same place centrally above the centre point of the base feet and the base will not be subjected to bending moments as a result of deformation of the table. In order to distribute the load over a wide surface area, the feet 10 of the table 9 preferably rest in bearing cups 11 mounted on the upper surface of the base 8. These bearing cups 11 are conveniently attached to the base 8 in a manner to indicate how the laying-up table shall be placed on the base and to ensure that the laying-up table is correctly positioned. However, it is necessary that at least two of these connections between the cups 11 and the base are resilient, so as to enable the cups to move so as to compensate for thermal expansion and tolerance errors.

It will be understood that the invention is not restricted to the described and illustrated embodiment thereof and that modifications are possible within the scope of the invention. For instance, more than three feet may be provided, e.g. so as to distribute the load on more points or to increase the stability tilt of the laying-up table. Furthermore, the table feet may be placed directly on the base, the position of the base feet being marked in some other way than by means of bearing cups, for instance by markings made on the upper side of the base. Neither need the feet of the laying-up table have spherical surfaces, since the bending moment that results from the contact points of the feet because of table deformation is so small that the requisite accuracy can often be maintained. The invention is therefore only limited by the contents of the following Claims.

## Claims

1. A co-ordinate measuring machine comprising a base (8), base-carried measuring equipment, and a measuring table (9) on which the object to be measured is placed, the measuring table (9) including at least three feet (10) through which the measuring table rests on the base (8) and wherein the base includes the same number of feet (12) as the measuring table through which the base rests on an underlying supportive surface,
**characterised** in that each of said feet is
placed directly beneath a corresponding foot (10) of the measuring table that each of the feet (10) of the measuring table has a spherical surface proximal to the base (8) so that the attack point of force vectors through the table feet will lie above the centre point of the base feet (12).

2. A machine according to Claim 2, **characterised** in that the spherical surface of the measuring table feet (10) rest in hemispherical cups (11) arranged on the base (8).

## Patentansprüche

1. Koordinatenmeßmaschine mit einem Unterteil (8), einer von dem Unterteil getragenen Meßeinrichtung und einem Meßtisch (9), auf dem das zu messende Objekt angeordnet wird, wobei der Meßtisch (9) wenigstens drei Füße (10) hat, durch welche der Meßtisch auf dem Unterteil (8) ruht, und wobei der Unterteil die gleiche Anzahl von Füßen (12) aufweist, wie der Meßtisch, wodurch der Unterteil auf einer darunter liegenden Stützfläche ruht, **dadurch gekennzeichnet**, daß jeder dieser Füße direkt unterhalb einem entsprechenden Fuß (10) des Meßtischs angeordnet ist und daß jeder der Füße (10) des Meßtisches eine sphärische Oberfläche benachbart zu dem Unterteil (8) hat, so daß der Angriffspunkt der Kraftvektoren durch die Tischfüße oberhalb des Mittelpunkts der Füße (12) des Unterteils liegt.

2. Maschine nach Anspruch 1, **dadurch gekennzeichnet**, daß die sphärischen Oberflächen der Füße (10) des Meßtischs in halbsphärischen Näpfen (11) ruhen, die auf dem Unterteil (8) angeordnet sind.

## Revendications

1. Machine de mesure de coordonnées comprenant une base (8), un équipement de mesure porté par la base, et une table de mesure (9) sur laquelle est placé l'objet à mesurer, la table de mesure (9) comprenant au moins trois pieds (10) par l'intermédiaire desquels la table de mesure repose sur la base (8), et la base comprenant le même nombre de pieds (12) que la table de mesure, pieds par l'intermédiaire desquels la base repose sur une surface de support située au-dessous,
caractérisée en ce que
- chacun des pieds est placé directement au-dessous d'un pied correspondant (10) de la table de mesure, et
- chacun des pieds (10) de la table de mesure comporte une surface sphérique à proximité de la base (8), de façon que le point d'attaque des vecteurs de force passant par les pieds de la table se situe au-dessus du point central des pieds (12) de la base.

2. Machine selon la revendication 1,
caractérisée en ce que
la surface sphérique des pieds (10) de la table de mesure repose dans des coupelles hémisphériques (11) montées sur la base (8).
